# EUROPEAN PATENT APPLICATION

(11) **EP 4 471 388 A1**
(43) Date of publication of application: **04.12.2024**
(21) Application number: 23177129.6
(22) Date of filing: 02.06.2023
(51) Int. Cl.: G01H 1/00

(54) **SYSTEM AND METHODS FOR ANALYSING VIBROACOUSTIC MEASUREMENTS**

(71) Applicant: Hitachi Energy Ltd, 8050 Zürich (CH)
(72) Inventor: SCHIESSLING, Joachim, 749 42 Enköping (SE); ABEYWICKRAMA, Nilanga, 723 51 Västerås (SE); FORSSEN, Cecilia, 724 60 Västerås (SE); PERSSON, Simon, 724 64 Västeras (SE); MATTSSON, Per, 752 41 Uppsala (SE)
(74) Representative: Valea AB

(57) **Abstract**

Method for training a model configured to analyse vibroacoustic measurements from an apparatus. The method comprises selecting at least one section in temporal vibroacoustic measurement data related to at least one individual mechanical event of the apparatus. The method further comprises labelling the at least one section based on order of occurrence or based on knowledge of the individual mechanical event. The method further comprises training the model using the at least one labelled section. Existence of a temporal vibroacoustic measurement data that corresponds to at least one labelled section is then identified.

## Description

### FIELD OF THE INVENTION

Embodiments herein relate to a system and methods performed therein. In particular, embodiments herein relate to training a model and monitoring vibroacoustic measurement data from an apparatus.

### BACKGROUND

A power transformer is equipment used in an electric grid of a power system. The power transformer transform voltage and current in order to transport and distribute electric energy. The power transformer may comprise a tap changer to keep the voltage stable. The tap changer may comprise a tap selector and a diverter switch. One condition for predictive maintenance of an apparatus, such as an on-load tap changer (OTLC) is the knowledge about the mechanical performance of the apparatus. Vibroacoustic data give potentially detailed information, however, drastic changes in amplitude between consecutive switching operations make the data analysis challenging.

### SUMMARY

An object of embodiments herein is to improve the analysis of vibroacoustic measurements from an apparatus.

According to an aspect of embodiments herein the object is achieved by a method for training a model configured to analyse vibroacoustic measurements from an apparatus. At least one section is selected in temporal vibroacoustic measurement data related to at least one individual mechanical event of the apparatus. The at least one section is labelled based on order of occurrence or based on knowledge of the individual mechanical event. The model is then trained using the at least one labelled section.

According to one embodiment, the at least one labelled section may be transferred to a time domain to use as input to train the model.

According to one embodiment, the at least one labelled section may be transferred to a frequency domain to us as input to train the model.

According to one embodiment, the model may be trained by comparing the at least one labelled section with a mechanical simulation.

According to another aspect of embodiments herein, the object is achieved by a method for monitoring vibroacoustic measurement data from an apparatus. Temporal vibroacoustic measurement data are inputted into a trained model. Then existence of a temporal vibroacoustic measurement data that corresponds to at least one labelled section is identified.

Such methods improve the ability to recognise patterns from the vibroacoustic measurement data. This is beneficial as it may improve the maintenance of the apparatus.

According to one embodiment, a time stamp of the temporal vibroacoustic measurement data that corresponds to the at least one labelled section may be identified.

According to one embodiment, identifying the existence of the temporal vibroacoustic measurement data that corresponds to the at least one labelled section may be performed by comparing the at least one labelled section with the trained model.

According to one embodiment, identifying the time stamp of the temporal vibroacoustic measurement data that corresponds to the at least one labelled section may be performed by comparing the at least one labelled section with the trained model.

According to yet another aspect of embodiments herein, the object is achieved by providing a system configured to train a model. The model is configured to analyse vibroacoustic measurements from an apparatus. The system is configured to select at least one section in temporal vibroacoustic measurement data related to at least one individual mechanical event of the apparatus. The system is further configured to label the at least one section based on order of occurrence or based on knowledge of the mechanical event. The system is further configured to train the model using the at least one labelled section.

According to a further aspect of embodiments herein, the object is achieved by providing a system configured to monitor vibroacoustic measurement data from an apparatus. The system is configured to input temporal vibroacoustic measurement data into a trained model. The system is further configured to identify existence of a temporal vibroacoustic measurement data that corresponds to at least one labelled section.

Embodiments herein are based on the realization that by labelling a selected section in vibroacoustic data, a model can be trained using the labelled section, and existence of a temporal vibroacoustic measurement data that corresponds to the labelled section can be identified. Patterns may be identified which improves the maintenance of the apparatus.

### BRIEF DESCRIPTION OF THE FIGURES

Further objects and advantages, as well as technical features of the invention will become apparent through the following description of one or several embodiments given with reference to the appended figures, where:
- Fig. 1: is a schematic overview according to embodiments herein;
- Fig. 2: is a schematic overview illustrating an example scenario according to embodiments herein;
- Fig. 3a: is a schematic overview illustrating vibroacoustic measurement data;
- Fig. 3b: is a schematic overview illustrating an example of local Fast Fourier Transform (FFT) for sections from vibroacoustic measurement data;
- Fig. 4: is a schematic overview depicting a prediction of sections from vibroacoustic measurement data.
- Fig. 5: is a flowchart depicting a method according to embodiments herein;
- Fig. 6: is a flowchart depicting a method according to embodiments herein; and
- Fig. 7: is a block diagram depicting a system according to embodiments herein.

It should be noted that the drawings have not necessarily been drawn to scale and that the dimensions of certain elements may have been exaggerated for the sake of clarity.

### DETAILED DESCRIPTION

The present invention is described in more detail below with reference to the appended figures, in which examples of embodiments are shown. The invention is not limited to the described examples of embodiments; it is rather defined by the appended patent claims. Like numbers in the figures refer throughout to like elements.

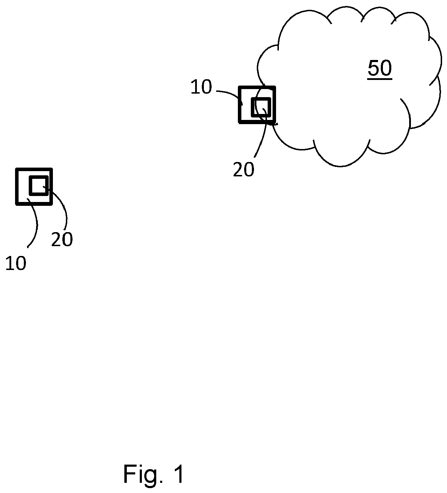

Fig. 1 illustrates a schematic overview of embodiments herein comprising a system 10 that provides for management of an apparatus. The system 10 comprises and may control a model 20, e.g. a machine learning (ML) model. The system 10 may comprise one or more sensors mounted on the apparatus and/or other sensors not mounted on the apparatus. For example, the one or more sensors may be placed directly on the top section of a tap changer. The sensors may be vibration sensors. The system is configured to train the model 20 and to monitor vibroacoustic measurement data from the apparatus.

The system 10, may e.g. be a control system, which may be used for performing or partly performing the methods herein. The system 10 may e.g. be located in a cloud 50. Collected data may be communicated from the sensors to the system 10 in the cloud 50. The system 10 may also be stand alone and calculations are then made locally.

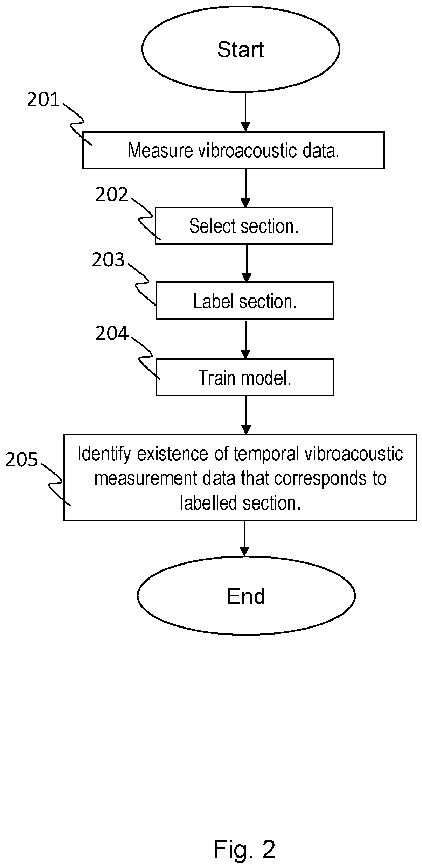

An example scenario of the methods performed by the system 10, according to embodiments herein, will now be described with reference to **Fig. 2****.** These methods enable that time occurrence of switching operations and proper operation of a mechanical switching sequence may be monitored, and trends may be observed and used for maintenance prediction.

**Action 201.** To understand the mechanical motions of the apparatus from its vibroacoustic properties, vibroacoustic data may be used. The vibroacoustic data relating to the apparatus may therefore need to be measured. This may be performed by placing one or more sensors on the apparatus to measure, e.g. record, the vibrations of mechanical events of the apparatus. The apparatus may be an OLTC, a circuit breaker, a disconnector, or a current interrupter.

**Action 202.** Then at least one section in the measured data, e.g. in temporal vibroacoustic measurement data, related to at least one individual mechanical event of the apparatus is selected. The section may also be referred to as a region. Selecting a section is advantageous as it makes the training of the model more straight forward. A fingerprint for this may then be created. A fingerprint, when used herein, is a temporal sequence of amplitudes or group of frequencies characteristics for a specific mechanical operation. Temporal vibroacoustic measurement data, when used herein, may be defined as vibroacoustic measurement data as a function of time.

The model may be trained in a time domain. Therefore, the at least one labelled section may be transferred to the time domain to use as input to train the model. The model may also be trained in a in frequency domain and the at least one labelled section may then be transferred to a frequency domain to use as input to train the model. The fingerprint captures the characteristics of a certain contact/switch/mechanical movement in the frequency domain. Local FFT is one option to use for this. It is also possible to use a wavelet plot approach by using the characteristics, in time domain, of the section and generate a wavelet plot.

**Action 203.** To use the model, labelled data is needed. Each pulse in the vibroacoustic data can be seen as something major happening in the mechanical motion of the apparatus and thus these pulses may be suitable for labelling. These pulses may be referred to, when used herein, as sections but they may also be called regions or events. The at least one section is therefore labelled. The labelling of the section is based on order of occurrence or based on knowledge of the individual mechanical event. Knowledge of the individual mechanical event may be knowledge, e.g. product understanding, of the mechanical event of the apparatus.

**Action 204.** When the at least one section is labelled, the training of the model is performed using the at least one labelled section as input to the model. The model may be any one out of: a ML model, a neural network, a logistic regression model, a support vector machine method (SVM) and a regression model. The model may be trained by comparing the at least one labelled section with a mechanical simulation. A mechanical simulation may be a digital twin.

**Action 205.** After training the model, the temporal vibroacoustic measurement data is inputted into the trained model to e.g. identify patterns. Examples of patterns, e.g. generic patterns, may be a very high voltage such as a voltage spike. Thus, existence of a temporal vibroacoustic measurement data that corresponds to at least one labelled section is identified. This may be performed by comparing the at least one labelled section with the trained model. Furthermore, a time stamp of the temporal vibroacoustic measurement data that corresponds to the at least one labelled section may be identified. This may be performed by comparing the at least one labelled section with a mechanical simulation. The probability, e.g. a prediction, that the existence and/or time stamp of the temporal vibroacoustic measurement data that corresponds to the at least one labelled section may be identified by the trained model. For example, the trained model may create a prediction. The predicting may work by feeding it a FFT fingerprint of any chosen section in a signal. It will then output a predicted probability for which label the section corresponds to.

As mentioned above, the vibroacoustic data may be analysed with the trained model to identify the mechanical movement in the vibroacoustic data (microscopy). E.g. time position of the mechanical operations of interest, presence of fingerprints, modification of the characteristic of the fingerprints (amplitude, frequency).

By identifying patterns, breakdown of the apparatus may be prevented. For example, if it is identified that there is a certain movement in section D it may mean that something is moving a little askew. It is then possible to plan for this and correct it. An assessment on what actions that needs to be done may thus be made.

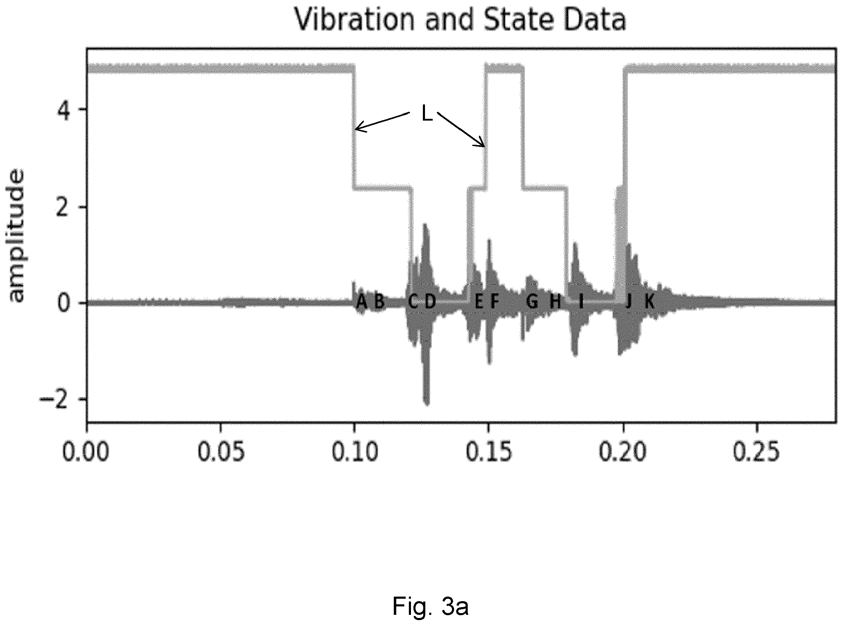

A schematic overview illustrating vibroacoustic measurement data with switching time reference measurements is shown in **Fig. 3a****.** Signatures in the vibroacoustic data corresponding to specific mechanical operations are labelled by letters A - K. E.g. cam roll movement, vibration of the Geneva wheel, auxiliary contact finger connection and reconnection. A line L shows an electrical contact measurement which is used as a reference signal.

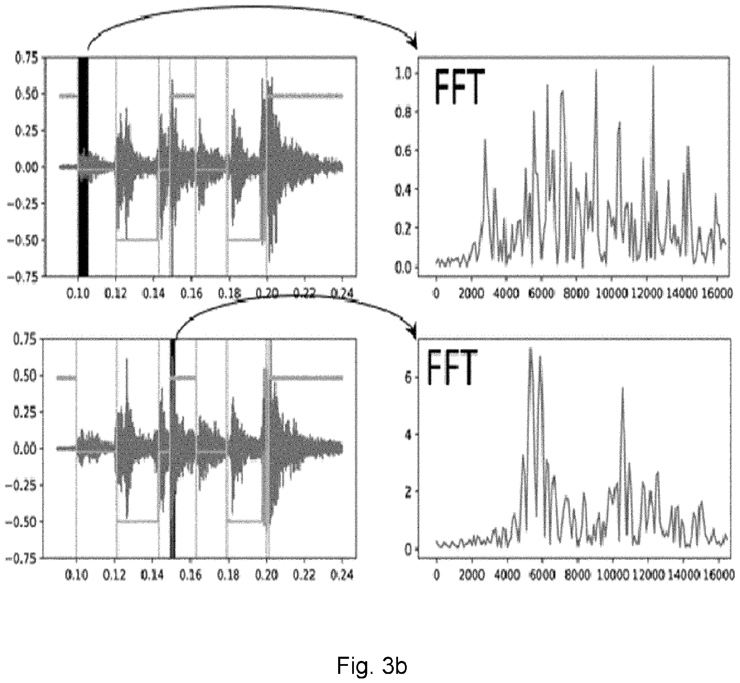

**Fig. 3b** is a schematic overview illustrating an example of local FFT for sections A and F for vibroacoustic measurement data.

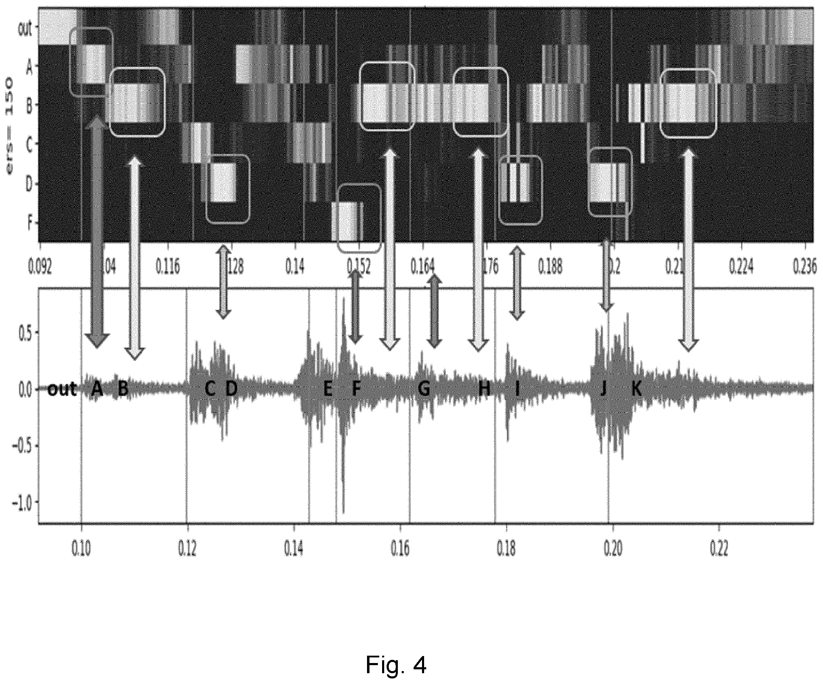

**Fig. 4** is a schematic overview depicting a prediction of sections from vibroacoustic measurement data. The model was trained with local FFT for sections A, B, C, D and F.

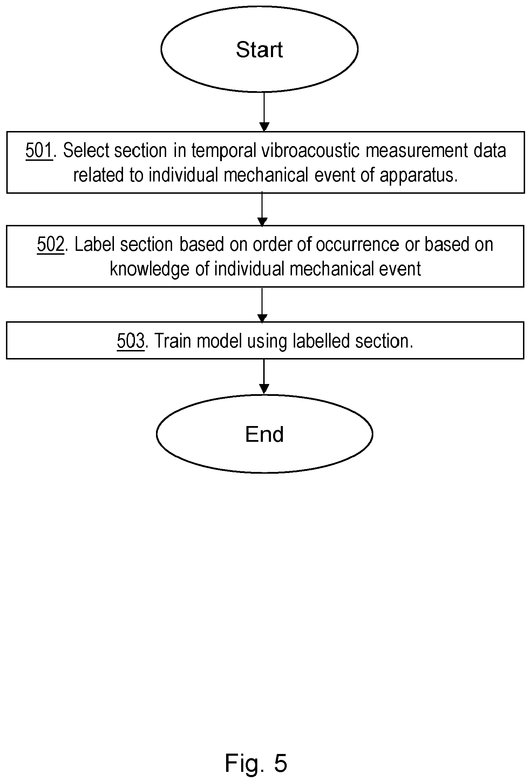

The method actions for training the model 20 configured to analyse vibroacoustic measurements from the apparatus, according to embodiments herein, will now be described with reference to a flowchart depicted in **Fig. 5****.** The actions do not have to be taken in the order stated below but may be taken in any suitable order.

**Action 501** comprises selecting at least one section in temporal vibroacoustic measurement data related to at least one individual mechanical event of the apparatus. the apparatus may be any one out of: an on-load tap changer, OLTC, a circuit breaker, a circuit breaker, a disconnector, and a current interrupter. This action relates to action 202 above.

**Action 502** comprises labelling the at least one section based on order of occurrence or based on knowledge of the individual mechanical event. This action relates to action 203 above.

**Action 503** comprises training the model using the at least one labelled section. This action relates to action 204 above.

According to some embodiments, the at least one labelled section may be transferred to a time domain to use as input to train the model.

According to some other embodiments, the at least one labelled section may be transferred to a frequency domain to use as input to train the model.

According to some other embodiments, the model may be trained by comparing the at least one labelled section with a mechanical simulation.

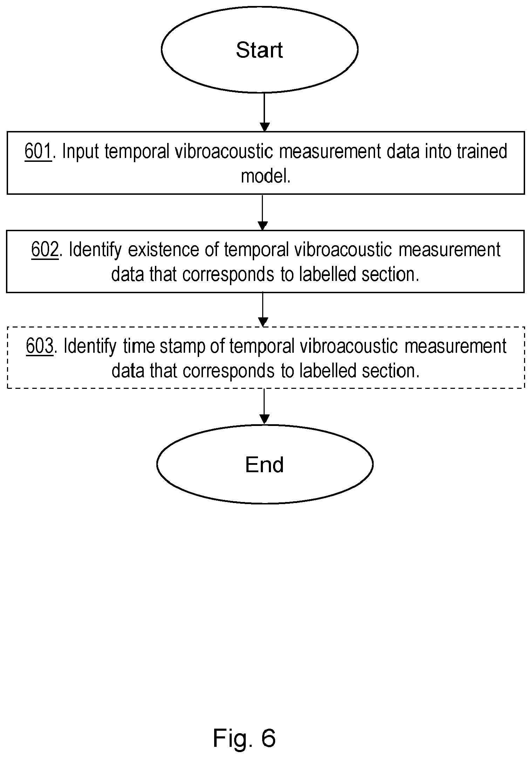

The method actions for monitoring vibroacoustic measurement data from the apparatus, according to embodiments herein, will now be described with reference to a flowchart depicted in **Fig. 6****.** The actions do not have to be taken in the order stated below but may be taken in any suitable order. Actions performed in some embodiments are marked with dashed boxes.

**Action 601** comprises inputting temporal vibroacoustic measurement data into the trained model. This action relates to action 205 above.

**Action 602** comprises identifying, e.g. detecting, existence of a temporal vibroacoustic measurement data that corresponds to at least one labelled section. According to some embodiments, identifying the existence of the temporal vibroacoustic measurement data that corresponds to the at least one labelled section may be performed by comparing the at least one labelled section with the trained model. This action relates to action 205 above.

**Action 603.** According to some embodiments, a time stamp of the temporal vibroacoustic measurement data that corresponds to the at least one labelled section may be identified. According to some embodiments, identifying the time stamp of the temporal vibroacoustic measurement data that corresponds to the at least one labelled section may be performed by comparing the at least one labelled section with the trained model. This action relates to action 205 above.

Embodiments herein such as mentioned above will now be further described and exemplified. The text below is applicable to and may be combined with any suitable embodiment described above. Embodiments herein comprises methods that analyses vibroacoustic measurements from the apparatus to e.g. extract time stamps of specific mechanical operations. Fast Fourier Transform (FFT) from sections of a vibroacoustic data set, e.g. local FFT, may be used as fingerprints of mechanical operations to train the model. Analysis of vibroacoustic data from field may then be carried out by comparing the FFT of a stepwise swept time window with the trained model. The output may give the degree of agreement with the fingerprint local FFT data and may indicate the occurrence of a particular vibration burst and hence the timing of the mechanical operation.

Methods are thus developed to identify one or more sections in a vibroacoustic data set. A model is trained with e.g. local FFT, for the sections of interest.

An idea of the methods is to identify characteristic sequences in vibroacoustic data. This may be performed by the following steps:
- Data preparation
   o Identification of signatures in the vibroacoustic data by comparison with mechanical simulations, e.g. digital twin, as shown in Fig. 3a
- Training
   o Extraction of local FFT data
      □ Intervals at the selected regions A, B, ... K, as shown in Fig. 3a, for a set of training vibration measurement data, , as e.g. shown in Fig. 3b
   o Start of the interval is determined relative to the reference signal from electrical switching time which is available for lab/factory measurements.
   ∘ Training a Logistic regression logistic model
- Analysis of data
   o Move a time window in small time step through the data and calculate the local FFT of this interval, then the FFT is fed into the trained logistic regression ML model as the input, which will then predict the region in the vibration signal that matches one of FTTs (of selected vibration bursts) used in the training. An analysis is shown in Fig. 4. The model was trained on vibration bursts around the regions A, B, C, D, F.

With these methods time occurrence of the switching operations and the proper operation of the mechanical switching sequence may be monitored, and trends may be observed and used for maintenance prediction. In general the signatures in pressure pulse data are not clearly defined, with this method the start of a fingerprint region may be defined with higher accuracy as compared with other methods based on a line shape analysis.

This method can be applied for vibroacoustic monitoring of other apparatus, such as circuit breakers, and is not limited to power products.

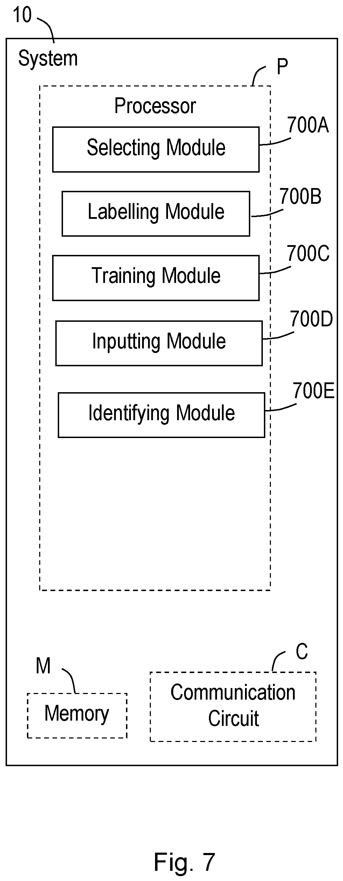

The block diagram in Fig. 7 illustrates a detailed but non-limiting schematic example of how the system 10 may be structured to bring about the above-described solution and embodiments thereof. The system 10 may be configured to operate according to any of the examples and embodiments of employing the solution as described herein, where appropriate. The system 10 is shown to comprise a processor "P", a memory "M" and a communication circuit "C" with suitable equipment for transmitting and receiving data, information and messages in the manner described herein.

The communication circuit C in the control system 10 thus comprises equipment configured for communication using a suitable protocol for the communication depending on the implementation. The data communication link between the different parts of the system 10, e.g. between the sensors and the system 10 in the cloud 50 or locally, may for an example utilize one or a plurality of different types of wired links or wireless links, such as for example xDSL, 2G, 3G, 4G, 5G TCP/IP, Wi-Fi, Bluetooth, WiMax, WLL, PSTN, optical fibre or a combination thereof. The solution is however not limited to any specific types of messages or protocols. For example, the system 10 may be adapted to communicate with a control centre or the like.

The system 10 is, e.g., by means of units, modules or the like, configured or arranged to perform at least some of the actions of the flowchart in Fig. 5 and Fig 6 as follows. The system 10 is configured to train a model, wherein the model is configured to analyse vibroacoustic measurements from the apparatus. The system is further configured to monitor vibroacoustic measurement data from the apparatus.

The system 10 is configured to select the at least one section in temporal vibroacoustic measurement data related to at least one individual mechanical event of the apparatus. This operation may be performed by a **selecting module 700A** in the system 10, as illustrated in action 501.

The at least one labelled section may be transferred to a time domain to use as input to train the model. The at least one labelled section may be transferred to a frequency domain to use as input to train the model.

The system 10 is configured to label the at least one section based on order of occurrence or based on knowledge of the mechanical event. This operation may be performed by a **labelling module 700B** in the system 10, as illustrated in action 502.

The system 10 is configured to train the model using the at least one labelled section. This operation may be performed by a **training module 700C** in the system 10, as illustrated in action 503. The model may be trained by comparing the at least one labelled section with a mechanical simulation.

The system 10 is configured to input temporal vibroacoustic measurement data into the trained model. This operation may be performed by an **inputting module 700D** in the system 10, as illustrated in action 601.

The system 10 is configured to identify existence of a temporal vibroacoustic measurement data that corresponds to at least one labelled section. This operation may be performed by an **identifying module 700E** in the system 10, as illustrated in action 602. Identifying the existence of the temporal vibroacoustic measurement data that corresponds to the at least one labelled section may be performed by comparing the at least one labelled section with the trained model.

The system 10 may further be configured to identify a time stamp of the temporal vibroacoustic measurement data that corresponds to the at least one labelled section, as illustrated in action 403. Identifying the time stamp of the temporal vibroacoustic measurement data that corresponds to the at least one labelled section may be performed by comparing the at least one labelled section with the trained model.

It should be noted that Fig. 7 illustrates various functional modules in the system 10 and the skilled person is able to implement these functional modules in practice using suitable software and hardware equipment. Thus, the solution is generally not limited to the shown structure of the system 10, and the functional modules therein may be configured to operate according to any of the features, examples and embodiments described in this disclosure, where appropriate.

The functional modules 700A-E described above may be implemented in the system 10 by means of program modules of a computer program comprising code means which, when run by the processor P causes the system 10 to perform the above-described actions and procedures. The processor P may comprise a single Central Processing Unit (CPU) or could comprise two or more processing units. For example, the processor P may include a general-purpose microprocessor, an instruction set processor and/or related chips sets and/or a special purpose microprocessor such as an Application Specific Integrated Circuit (ASIC). The processor P may also comprise a storage for caching purposes.

The computer program may be carried by a computer program product in the system 10 in the form of a memory having a computer readable medium and being connected to the processor P. The computer program product or memory M in the system 10 thus comprises a computer readable medium on which the computer program is stored e.g. in the form of computer program modules or the like. For example, the memory M may be a flash memory, a Random-Access Memory (RAM), a Read-Only Memory (ROM) or an Electrically Erasable Programmable ROM (EEPROM), and the program modules could in alternative embodiments be distributed on different computer program products in the form of memories within the system 10.

While the solution has been described with reference to specific exemplifying embodiments, the description is generally only intended to illustrate the inventive concept and should not be taken as limiting the scope of the solution. For example, the terms "data", "model", "vibroacoustic measurements", "section", "region", "temporal vibroacoustic measurement data", "event", "mechanical event", "mechanical operation", "individual mechanical event", "mechanical simulation", "fingerprint" and "label", have been used throughout this disclosure, although any other corresponding entities, functions, and/or parameters could also be used having the features and characteristics described here. The solution is defined by the appended claims.

It will be appreciated that the foregoing description and the accompanying drawings represent non-limiting examples of the method and arrangement taught herein. As such, the arrangement and techniques taught herein are not limited by the foregoing description and accompanying drawings. Instead, the embodiments herein are limited only by the following claims and their legal equivalents.

## Claims

1. Method for training a model configured to analyse vibroacoustic measurements from an apparatus, the method comprising:
*selecting* (501) at least one section in temporal vibroacoustic measurement data related to at least one individual mechanical event of the apparatus;
*labelling* (502) the at least one section based on order of occurrence or based on knowledge of the individual mechanical event; and
*training* (503) the model using the at least one labelled section.

2. The method according to any one of claim 1, wherein the at least one labelled section is transferred to a time domain to use as input to train the model.

3. The method according to any one of claim 1, wherein the at least one labelled section is transferred to a frequency domain to use as input to train the model.

4. The method according to any one of claims 1-3, wherein the model is trained by comparing the at least one labelled section with a mechanical simulation.

5. Method for monitoring vibroacoustic measurement data from an apparatus, the method comprising:
*inputting* (601) temporal vibroacoustic measurement data into a trained model according to any one of claims 1-4, and
*identifying* (602) existence of a temporal vibroacoustic measurement data that corresponds to at least one labelled section.

6. The method according to claim 5, wherein the method further comprises:
*identifying* (603) a time stamp of the temporal vibroacoustic measurement data that corresponds to the at least one labelled section.

7. The method according to claim 5 or 6, wherein identifying the existence of the temporal vibroacoustic measurement data that corresponds to the at least one labelled section is performed by comparing the at least one labelled section with the trained model.

8. The method according to claim 5 or 6, wherein identifying the time stamp of the temporal vibroacoustic measurement data that corresponds to the at least one labelled section is performed by comparing the at least one labelled section with the trained model.

9. System (10) configured to train a model, wherein the model is configured to analyse vibroacoustic measurements from an apparatus, and wherein the system is configured to:
select at least one section in temporal vibroacoustic measurement data related to at least one individual mechanical event of the apparatus;
label the at least one section based on order of occurrence or based on knowledge of the mechanical event; and
train the model using the at least one labelled section.

10. The system (10) according to claim 9, wherein the at least one labelled section is transferred to a time domain to use as input to train the model.

11. The system (10) according to claim 9, wherein the at least one labelled section is transferred to a frequency domain to use as input to train the model.

12. The system (10) according to any one of claims 9-11, wherein the model is trained by comparing the at least one labelled section with a mechanical simulation.

13. System (10) configured to monitor vibroacoustic measurement data from an apparatus, wherein the system is configured to:
input temporal vibroacoustic measurement data into a trained model according to any one of claims 9-12, and
identify existence of a temporal vibroacoustic measurement data that corresponds to at least one labelled section.

14. The system (10) according to claim 13, wherein the system is further configured to:
identify a time stamp of the temporal vibroacoustic measurement data that corresponds to the at least one labelled section.

15. The system (10) according to claim 13 or 14, wherein identifying the existence of the temporal vibroacoustic measurement data that corresponds to the at least one labelled section is performed by comparing the at least one labelled section with the trained model.

16. The system (10) according to claim 13 or 14, wherein identifying the time stamp of the temporal vibroacoustic measurement data that corresponds to the at least one labelled section is performed by comparing the at least one labelled section with the trained model.
